# DEMANDE DE BREVET EUROPEEN

(11) **EP 0 845 627 A1**
(43) Date de publication de la demande: **03.06.1998**
(21) Numéro de dépôt: 97402725.2
(22) Date de dépôt: 14.11.1997
(51) Int. Cl.: F16L 11/12, B32B 1/08, F16L 9/133, F16L 11/04

(54) **Tuyau de transport de carburant**

(30) Priorité: 28.11.1996 FR 9614575
(71) Demandeur: HUTCHINSON, F-75008 Paris (FR)
(72) Inventeur: Andre, Maxime, 45220 Chateaurenard (FR); Baune, Francis, 45200 Montargis (FR)
(74) Mandataire: Ramey, Daniel

(57) **Abrégé**

L'invention concerne un tuyau de tranport de carburant en particulier pour véhicule automobile, comprenant une couche interne (10) de polyester tel que du PBT reliée directement à une couche externe (12) de protection en élastomère vulcanisé tel que du CSM.

Ce tuyau présente une très bonne imperméabilité vis-à-vis des carburants classiques et des carburants alcoolisés.

## Description

L'invention concerne un tuyau de transport de carburant, notamment pour véhicule automobile.

On a proposé de remplacer les tuyaux de transport de carburant, traditionnellement réalisés en caoutchouc, par des tuyaux en matière thermoplastique qui sont moins chers, plus légers et moins encombrants, mais qui sont en général trop rigides, qui ont une imperméabilité médiocre vis-à-vis des carburants alcoolisés (quand leur couche interne est en polyamide) ou qui sont très onéreux (quand leur couche interne est en matière fluorée) et qui ont une mauvaise tenue au feu.

On a également proposé des tuyaux à structure composite comprenant une couche interne de thermoplastique, en général de polyamide, et une couche externe d'élastomère vulcanisé qui sont reliées par une couche d'adhésif, ces tuyaux ayant une meilleure tenue au feu mais ayant toujours une médiocre imperméabilité aux carburants alcoolisés et comportant un nombre important de couches.

L'invention a pour objet un nouveau tuyau de transport de carburant qui permette d'éviter les inconvénients précités de la technique antérieure.

Elle propose, dans ce but, un tuyau de transport de carburant en particulier pour véhicule automobile, du type comprenant une couche interne de matière thermoplastique et une couche externe d'élastomère vulcanisé, caractérisé en ce que la couche interne est en polyester tel en particulier qu'un PBT et est reliée directement, par adhérence, à la couche externe d'élastomère vulcanisé.

Ce tuyau présente un grand nombre d'avantages par rapport à la technique antérieure :
- il a un faible coût,
- il présente une excellente imperméabilité vis-à-vis des carburants classiques et des carburants alcoolisés (dont l'utilisation se développe de plus en plus actuellement),
- il a une très grande souplesse, un faible encombrement, un nombre de couches limité à 2, et une très bonne tenue au feu.

Le polyester utilisé peut être un PBT, un PET ou un mélange de PET et de PBT.

L'élastomère vulcanisé de la couche extérieure est de préférence un CSM, mais il peut en variante être remplacé par un élastomère choisi dans le groupe comprenant ECO, CM, CR, POE, EPDM ou un mélange de ces composés.

Il est également possible d'incorporer à ce tuyau une couche mince de polyester, en particulier de PBT, rendu électroconducteur par incorporation de charges, cette couche mince ajoutée se trouvant à l'intérieur ou à l'extérieur de la couche interne précitée en polyester.

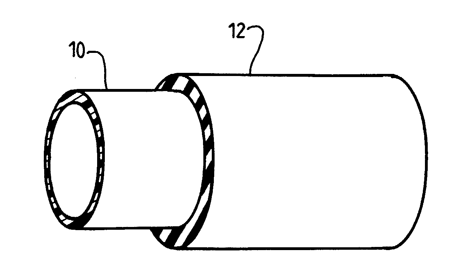

L'invention sera mieux comprise et d'autres caractéristiques, détails et avantages de celle-ci apparaîtront plus clairement à la lecture de la description qui suit, faite à type d'exemple en référence au dessin annexé qui est une vue schématique en perspective d'un tuyau selon l'invention.

Le tuyau de transport de carburant représenté au dessin est constitué d'une couche interne 10 de polyester et d'une couche externe 12 de protection en élastomère vulcanisé qui adhére directement à la couche interne 10.

De préférence, le polyester est un PBT (poly-téréphtalate de butylène) et l'élastomère est un CSM (polyéthylène chlorosulfoné) dont la compatibilité et l'adhérence mutuelles sont suffisantes pour empêcher toute séparation des couches 10 et 12 du tuyau.

L'épaisseur de paroi de ce tuyau peut être inférieure à 2mm, l'épaisseur de la couche interne 10 étant par exemple de 0,5 mm et celle de la couche externe 12 de 0,5 mm.

En variante, la couche interne 10 peut être en PET (poly-téréphtalate d'éthylène) ou en un mélange de polyesters, par exemple de PET et de PBT. Les polyesters peuvent être greffés, pour améliorer l'adhérence à l'élastomère, et/ou assouplis, pour diminuer la rigidité du tuyau.

La couche externe 12 d'élastomère vulcanisé peut être en ECO (copolymère d'épichlorhydrine et d'oxyde d'éthylène),en CM (polyéthylène chloré), en CR (polychloropréne), en polyoléfine élastomère POE, ou en EPDM (terpolymère d'éthylène, de propylène et de diène) ou en un mélange de ces élastomères.

La couche interne 10 en polyester, notamment en PBT, permet d'obtenir une imperméabilité aux carburants alcoolisés qui est six fois supérieure environ à celle d'une couche interne en polyamide. De plus, les polyesters ont une meilleure tenue aux températures élevées que les polyamides (la température de fusion d'un PET étant de l'ordre de 225°C tandis que celle d'un PA 11 est de l'ordre de 185° C), ils ont une bonne tenue aux chocs à froid et ils sont plus facilement rendus électro-conducteurs que des matières fluorées, par incorporation de charges telles que du noir de carbone par exemple.

Enfin, les polyesters sont des matières ayant une faible reprise d'humidité, et qui sont moins sensibles à l'humidité que les polyamides, ce qui permet une vulcanisation du tuyau en autoclave et une mise en forme par injection de vapeur d'eau à l'intérieur du tuyau pour le figer dans une géométrie donnée.

## Revendications

1. Tuyau de transport de carburant, en particulier pour véhicule automobile, du type comprenant une couche interne de matière thermoplastique et une couche externe d'élastomère vulcanisé, caractérisé en ce que la couche interne (10) est en polyester, tel en particulier qu'un PBT, et est reliée directement, par adhérence, à la couche externe (12) en élastomère vulcanisé.

2. Tuyau selon la revendication 1, caractérisé en ce que le polyester est un PET ou un mélange de polyesters par exemple de PBT et de PET.

3. Tuyau selon la revendication 1 ou 2, caractérisé en ce que l'élastomère vulcanisé est un CSM.

4. Tuyau selon la revendication 1 ou 2, caractérisé en ce que l'élastomère vulcanisé est un ECO, CR, CM, POE, EPDM, ou un mélange de ces élastomères.

5. Tuyau selon l'une des revendications 1 à 4, caractérisé en ce que son épaisseur de paroi est inférieure à 2 mm.

6. Tuyau selon l'une des revendications 1 à 5, caractérisé en ce qu'il comprend de plus une couche mince de polyester, en particulier de PBT, rendu électroconducteur par incorporation de charges, à l'intérieur ou à l'extérieur de la couche interne précitée.
